# EUROPÄISCHE PATENTSCHRIFT

(11) **EP 1 791 234 B1**
(45) Veröffentlichungstag und Bekanntmachung des Hinweises auf die Patenterteilung: **09.01.2013**
(21) Anmeldenummer: 06124626.0
(22) Anmeldetag: 23.11.2006
(51) Int. Cl.: H02B 1/50

(54) **Dachaufsatz für Kabelverteilerschrank**
Roof extension for cable distribution cabinet
Extension de toit pour armoire de distribution de câbles

(30) Priorität: 23.11.2005 DE 102005055880
(43) Veröffentlichungstag der Anmeldung: 30.05.2007
(73) Patentinhaber: Berthold Sichert GmbH, 12277 Berlin (DE)
(72) Erfinder: Perschon, Helmut, 12277 Berlin (DE); Irmer, Günter, 13055 Berlin (DE)
(74) Vertreter: Alber, Norbert

(56) Entgegenhaltungen:
- DE-A1- 10 105 993
- DE-A1- 10 310 778

## Beschreibung

### I. Anwendungsgebiet

Die vorliegende Erfindung betrifft einen Dachaufsatz für Kabelverteilerschränke (KVS).

### II. Technischer Hintergrund

Kabelverteilerschränke dienen primär der Unterbringung von Kabelverzweigungen von einem oder mehreren Hauptkabeln zu einer Vielzahl von End-Nutzern, wobei gerade in der Kommunikationstechnik derartige Kabelverteilerschränke meist im Freien und auf öffentlichem Grund frei zugänglich aufgestellt sind und die Hauptkabel von unten aus dem Erdreich herangeführte Kabel mit einer Vielzahl von Adern sind, die über eine große Anzahl von Klemmleisten und daran vorhandenen Klemmstellen mit den Anschlusskabeln, die zu den einzelnen Verbrauchern führen, verbunden werden.

Die Kabelverteilerschränke bestehen deshalb in der Regel aus einem teilweise im Erdboden versenkten, in der Aufsicht hohlen, Sockel, durch die das eine oder die mehreren Erdkabel herangeführt werden, sowie einem darauf aufgesetzten Gehäuse, welches unter Umständen einen inneren Montagerahmen zum befestigen der technischen Komponenten umfasst, auf jeden Fall aber ein außen umgebendes, wetterfestes Gehäuse aus Metallblechen oder Kunststoff, abgedeckt nach oben von einem Dach. Derartige Verteilerschränke sind aus der DE 103 10 778 A1 und aus der DE 101 05 993 A1 bekannt.

Solange derartige Kabelverteilerschränke - was in der Vergangenheit der Regelfall war - nur die besagten Klemmstellen enthielten, war deren Innerraum in der Regel nicht vollständig dicht verschlossen, sondern wies Lüftungsöffnungen, vorzugsweise im unteren und oberen Bereich, auf, um mittels Kaminwirkung erzeugter Luftströmungen durch das Innere des Schrankes passiv eine Durchlüftung zu erzielen und dadurch vor allem die Bildung von Kondenswasser im Inneren zu vermeiden, das zu Kurzschlüssen und Korrosion führen könnte.

Aus der DE 298 23 807 U1 ist ein Dachaufsatz bekannt, der bereits einen dichten oberen Dachraum aufweist. Weiterhin ist aus der DE 196 09 845 C1 ein Dachaufsatz bekannt, in dem vertikal stehende Trennbleche den Dachraum unterteilen. Schließlich zeigt die DE 195 15 121 C2 ein Gehäuse mit einem dichten Innengehäuse und einem belüfteten Außengehäuse.

Es besteht nunmehr häufig das Problem, dass in derartige in Betrieb befindliche Schränke zusätzlich technische Komponenten eingebaut werden sollen, und zwar häufig aktive technische Komponenten, die aus diesem Grund in einem gegen das Austreten von elektromagnetischen Strahlen abgedichteten, so genannten EMV-dichten, Bauraum untergebracht werden müssen. Damit können solche aktiven Komponenten nicht in den durchlüfteten Bauraum eines vorhandenen Schrankes eingesetzt werden, zumal dort hierfür auch meist kein Platz mehr vorhanden ist.

Die CH 658 511 A5 betrifft die Erweiterung eines bestehenden Verteilerschranks durch ein Kühlaggregat zur Klimatisierung des Verteilerschrankinnenraumes. Hierzu ist ein Dachaufsatz in einen oberen und unteren Dachraum unterteilt. Der obere Dachraum ist nach außen hin geöffnet und dient zur Aufnahme einer Lüftungsvorrichtung, um Luft mit der Umgebung auszutauschen. Der untere Dachraum ist durch den Zwischenboden luftdicht von dem oberen Dachraum getrennt und dient zur Aufnahme der Lüftungseinrichtung, die für einen Luftaustausch zwischen dem unteren Dachraum und Verteilerschrankraum sorgt.

### III. Darstellung der Erfindung

### a) Technische Aufgabe

Es ist die Aufgabe gemäß der Erfindung, ein Verfahren und eine Vorrichtung zum zusätzlichen Unterbringen von aktiven elektrischen Komponenten an einem Schaltschrank mit durchlüftetem Bauraum schnell und kostengünstig zu schaffen.

### b) Lösung der Aufgabe

Diese Aufgabe wird durch die Ansprüche 1, 3 und 9 gelöst. Vorteilhafte Ausführungsformen ergeben sich aus den Unteransprüchen.

Durch die Unterteilung des Innenraumes des Dachaufsatzes in einen oberen, dichten und einen unteren, nach unten offenen sowie Lüftungsöffnungen nach außen aufweisenden Dachräume werden unterschiedliche Funktionsräume, nämlich einmal EMV-abdichtbar für empfindliche, elektromagnetische Strahlung abgebende, aktive Komponenten einerseits und passive zu durchlüftende Komponenten andererseits geboten.

Indem der Dachaufsatz modular aufgebaut ist, und insbesondere aus einem unteren umlaufenden Aufsatzrahmen zum Aufsetzen auf dem darunter befindlichen alten Gehäuse und einem oberen Dach sowie dazwischen vertikal anzuordnenden Tragpfosten sowie dazwischen einsetzbare Wände umfasst, kann - durch unterschiedliche Abmessungen z. B. der Aufsatzrahmen und des Daches sowie des Zwischenbodens als auch der Höhe der Tragpfosten und Wände aus einer begrenzten Anzahl von Einzelteilen sehr viele unterschiedlich große Dachaufsätze aus einem solchen Bausatz hergestellt werden, abhängig von der Grundfläche des als Basis dienenden alten Schaltschrankgehäuses sowie der gewünschten Höhe des Dachaufsatzes.

Dabei können insbesondere der Aufsatzrahmen, die Tragpfosten und das Dach aus Kunststoff, insbesondere als Spritzteile aus Polycarbonat, und damit sehr kostengünstig trotz ihrer komplizierten Form hergestellt werden, während die Wände vorzugsweise aus Metallblechen, insbesondere Alublechen bestehen werden. Dies auch deshalb, um die im unteren Bereich dieser Wände, nämlich im Bereich unterhalb des eingezogenen Zwischenbodens, vorhandenen Durchtrittsöffnungen in Form von nach außen ausgestellten Kiemen leichter mittels eines Stanz- und Kaltumformschrittes herstellen zu können.

Eine Ausnahme stellt dabei die Vorderwand dar, die vorzugsweise nur als umlaufender Rahmen ausgebildet ist und damit eine große Frontöffnung bietet, die nach Durchführung von Wartungs- und Montagearbeiten mittels einer Frontklappe verschlossen werden muss. Zur Vergrößerung des Innenrahmens kann diese Frontklappe wiederum nach außen ausgewölbt gestaltet sein. Dabei ist die Herstellung der rahmenartigen Frontplatte ebenfalls bevorzugt mittels Kunststoff zu lösen, und auch diejenige der Frontklappe.

Der Zwischenboden sitzt dabei vorzugsweise auf Tragankem auf, die vom Aufsatzrahmen nach innen gerichtet vorhanden sind zum Aufsetzen und Verschrauben des Zwischenbodens. Weitere solche Tragkonsolen sind zum Verschrauben des Aufsatzrahmens auf dem darunter befindlichen Gehäuse des alten Schrankes vorhanden. Im Zwischenboden ist wenigstens ein Durchlass zum Hindurchführen von Kabeln vorhanden, mit deren Hilfe die aktiven Komponenten im oberen Dachraum mit der Technik im darunter befindlichen alten Verteilerschrank verbunden werden kann. Zu diesem Zweck kann in dem Durchlass mittels darüber gesetzten Durchlass-Blöcken, die aus zwei geteilten Hälften bestehen, der Kabeldurchlass EMV-dicht ausgebildet werden. Sofern Dach und/oder Wände nicht aus EMV-dichtem Material bestehen, müssen sie mit einer EMV-dichten Abschirmung aus Metallblechen oder dünner Metallfolie insbesondere auf deren Innenseiten, hinterlegt werden. Die Fugen zwischen derartigen Abschirmblechen werden anschließend mittels z. B. selbst klebender Aluminiumfolie abgedichtet.

Zwischen dem Zwischenboden und dem Dach verlaufen vertikal wenigstens zwei Montageträger, an denen die im Dachraum unterzubringenden aktiven Komponenten auf einfache Art und Weise positioniert und verschraubt werden können. Die Montageträger sind profilartig gebogene Metallplatten, die jedoch nicht bis zum oberen Dach bzw. Dachblech durchgehen, sondern im Abstand davor enden, insbesondere unter zwischen legen von Abstandshaltern, um über die obere Kante des Montageträgers hinweg eine Luftzirkulation zu ermöglichen.

Auf diese Art und Weise ist ein Erweitern eines Kabelverteilerschranks auf sehr einfache Weise und unter nur sehr kurzfristiger Abschaltung der Technik im Inneren des Schaltschrankes möglich:
Der Dachaufsatz wird soweit als möglich vormontiert also einschließlich Ausstattung mit den aktiven Komponenten und Herausführung der Kabel von den aktiven Komponenten des oberen Dachraumes nach unten in den unteren Dachraum in der richtigen Länge.

Anschließend wird vom alten Kabelverteilerschrank das Dach abgenommen und der neue Dachaufsatz aufgesetzt.

Nun muss lediglich noch der neue Dachaufsatz mit dem alten Gehäuse fest verschraubt und das in den alten Bauraum herabhängende eine oder mehrfache Kabel aus dem oberen Dachraum angeschlossen werden und genau hierfür ist in der Regel eine kurzzeitige, nur Minuten dauernde, Abschaltung der Technik des Verteilerschrankes notwendig.

Anschließend wird sowohl die Frontklappe des oberen Dachraumes als auch die Tür des unteren alten Gehäuses geschlossen und der Schrank ist wieder in Betrieb.

Anstatt neben dem vorhandenen, durchlüfteten Kabelverteilerschrank einen weiteren Kabelverteilerschrank mit abgedichtetem, EMV-dichten Bauraum zu setzen, was umfangreiche Erdarbeiten und die Zustimmung des Grundeigentümers sowie häufig auch eine Baugenehmigung erfordert, wird erfindungsgemäß vorgeschlagen, das den alten Schrank nach oben abdeckende Dach durch einen in der Höhe zusätzlichen Bauraum schaffenden Dachaufsatz zu ersetzten, der den benötigten EMV-dichten Bauraum enthält.

Zusätzlich muss dieser Dachaufsatz wie bisher das alte Dach die Entlüftung des darunter liegenden alten Bauraumes durch obere Entlüftungsöffnungen sicherstellen.

### c) Ausführungsbeispiele

Ausführungsformen gemäß der Erfindung sind im folgenden beispielhaft näher beschrieben. Es zeigen:
- Fig. 1:: perspektivische Ansichten des Dachaufsatzes,
- Fig. 2:: Seitenansichten des Dachaufsatzes,
- Fig. 3:: eine Ansicht des Dachaufsatzes von unten,
- Fig. 4:: einen Vertikalschnitt durch den Dachaufsatz, und
- Fig. 5:: Prinzipdarstellungen des Umbauablaufes.

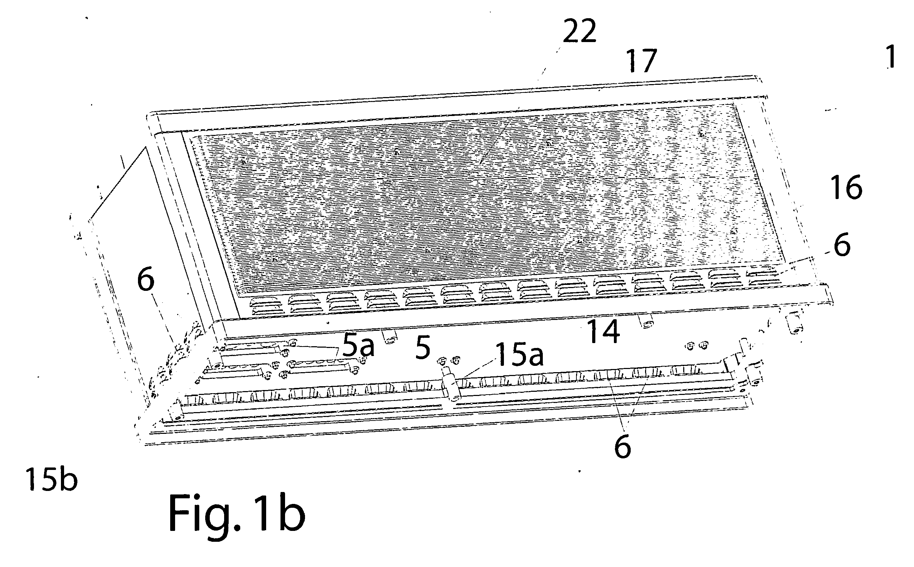

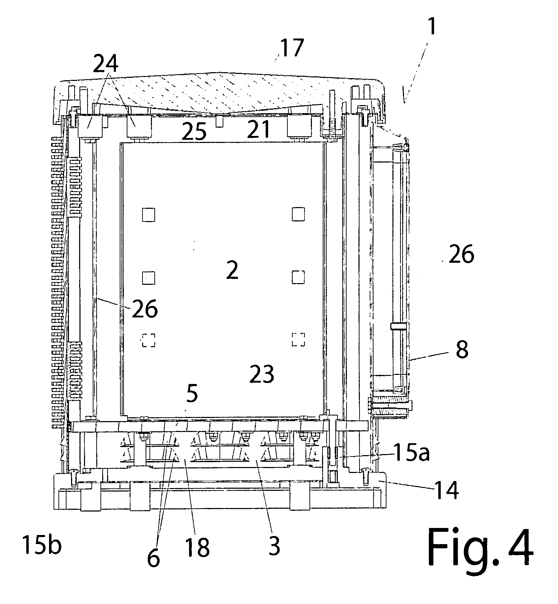

Das entscheidende Merkmal ist vor allem in den Figuren 1b und 4 zu erkennen, nämlich dass der von Wänden und einem Dach begrenzte Dachaufsatz 1 in seinem unteren Höhenbereich mittels eines Zwischenbodens 5 in einen oberen, abdichtbaren Dachraum 2 und einen unteren, nach unten offenen Dachraum 3 unterteilt ist, und sich im Höhenbereich des unteren Dachraumes 3 in den Seitenwänden 18, 19 Durchgangsöffnungen von innen nach außen in Form von Kiemen 6 zum Entlüften des unteren Dachraumes 3 und damit des gesamten Bauraumes 13 des darunter liegenden, mit dem unteren Dachraum 3 einen gemeinsamen Raum bildenden alten Bauraum vorhanden sind.

Figur 1b lässt ferner die Durchlässe 5a und den Zwischenboden 5 erkennen, in welchem abdichtbare Kabeldurchlässe 4 ausgebildet werden können, um die im oberen Dachraum 2 vorhandenen, in den Zeichnungen nicht dargestellten, elektrischen Komponenten 7 vom Bauraum 13 des darunter liegenden Schrankes 10 aus zu erreichen und anzuschließen.

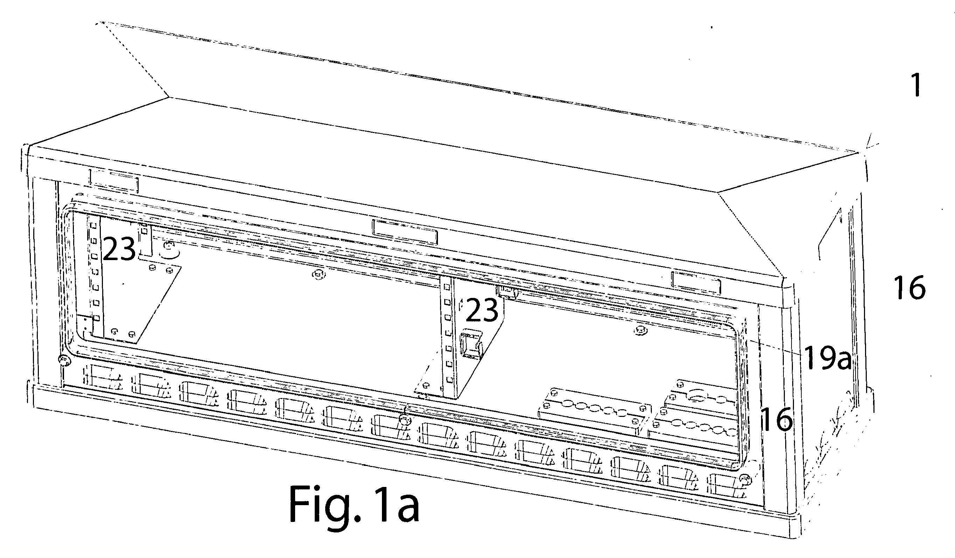

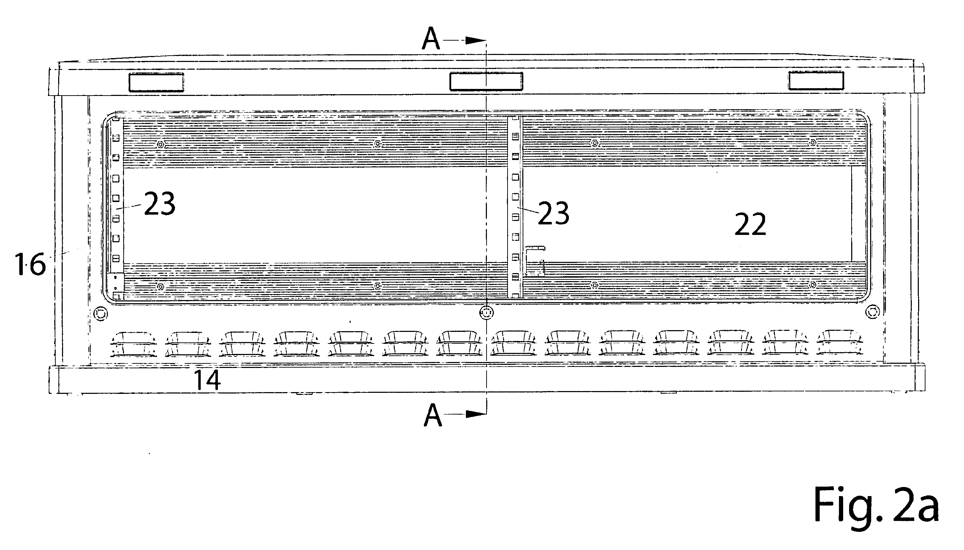

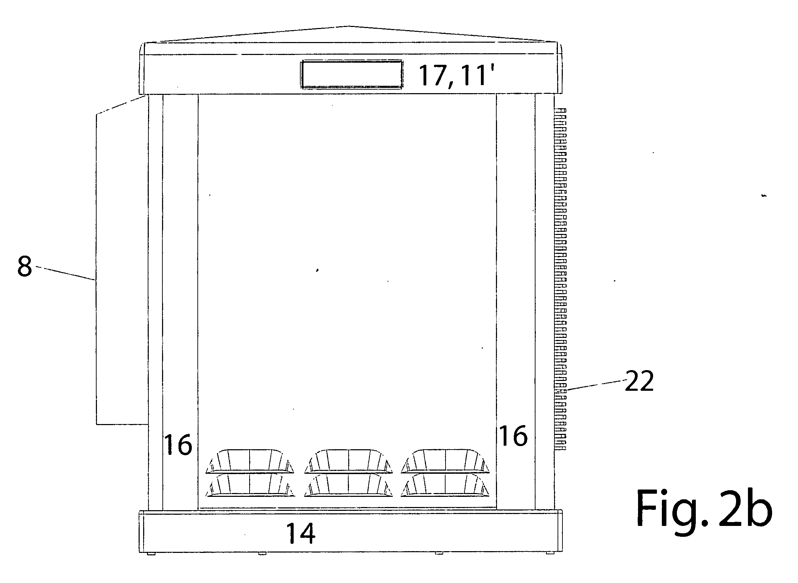

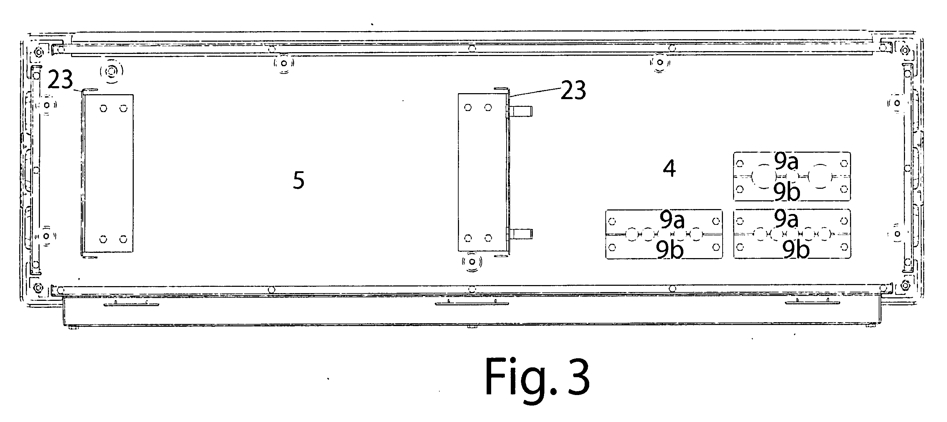

Dabei besteht - wie am besten die Figuren 1 bis 3 zeigen - das Gehäuse des Dachaufsatzes 1 aus einem unteren, in der Aufsicht geschlossen umlaufenden, Aufsatzrahmen 14, der so gestaltet ist, dass er - nach Abnehmen des alten Daches 11' - auf das dann nach oben offene Gehäuse 11 eines vorhandenen Kabelverteilerschrankes 10 aufgesetzt werden kann. In der gewünschten Höhe oberhalb des Aufsatzrahmens 14 befindet sich das Dach 17, welches auch das alte Dach 11' des Schrankes 10 sein kann, und dazwischen verlaufen als vertikale Abstandshalter Tragpfosten 16, die ebenso wie Dach 17 und unterer Aufsatzrahmen 14 vorzugsweise aus Kunststoff als Spritzgussteile hergestellt sind.

Aufgrund der modularen Bauweise können unterschiedlich lange Tragpfosten 16 einen unterschiedlich hohen und damit unterschiedlich großen Dachaufsatz 1 je nach Größe der darin unterzubringenden Komponenten 7 schaffen.

Die Seiten werden verschlossen durch Seitenwände 18, 19, die mit ihren Rändern in entsprechende Nuten 20 des unteren Aufsatzrahmens 14 und des oberen Daches 17 sowie der Tragpfosten 16 formschlüssig aufgenommen sind und für das Schaffen unterschiedlich hoher Dachaufsätze 1 aus den verschiedenen Teilen eines Bausatzes in analogen Höhen passend zu den Tragpfosten 16 vorliegen müssen.

Der Zwischenboden 5 ist vom oberen Bauraum 2 her aufgesetzt und verschraubt auf hierfür am Aufsatzrahmen 14 vorhandene, in den Innenraum hineinragende Tragkonsolen 15a, wobei der Aufsatzrahmen 14 darüber hinaus weitere Tragkonsolen 15b umfasst, die dem Verschrauben gegenüber dem darunter liegenden alten Gehäuse 11 dienen, was vorzugsweise vom unteren Bauraum 13 aus erfolgt.

Das Verschrauben des Daches 17 auf den Tragpfosten 16 erfolgt ebenfalls von innen, also vom oberen Dachraum 2, her, so dass alle Verschraubungen nur von innen lösbar sind, also nach Öffnen der Frontklappe 8 des oberen Dachraumes 2 bzw. der Tür 11" des alten Gehäuses 11, die beide durch entsprechende Sicherungselemente wie Spezialriegel oder Schloss gesichert sind.

Die Lüftungsöffnungen in dem Bereich des unteren Dachraumes 3 sind vorzugsweise als sog. Kiemen 6 ausgebildet, also schräg von oben nach unten nach außen ausgestellte Ausprägungen in den Seitenwänden 18,19, die nach unten offen sind, weshalb diese Seitenwände 18,19 vorzugsweise aus Blech, insbesondere Alublech bestehen, um die Kiemen 6 im Kaltverformen herstellen zu können.

Zur Entwärmung des oberen Dachraumes 2 sind zusätzlich an der Innenseite und Außenseite der die Rückwand 19b bildenden Metallplatte rippenförmige, großflächige Kühlkörper 22a, b flächig befestigt, insbesondere mittels einer Wärmeleitpaste verklebt oder verschraubt, um die passive Wärmeabgabe vom oberen Dachraum 2 nach außen zu verbessern.

Die Vorderwand 19a ist als lediglich umlaufender Frontrahmen 19a' ausgebildet und kann auch aus Kunststoff bestehen, so dass darin eine großflächige Frontöffnung geschaffen wird für Montage- und Wartungsarbeiten im oberen Dachraum.

Diese Frontöffnung wird geschlossen durch eine darauf aufgesetzte, verschraubte und gesicherte Montageklappe 8, die insbesondere wannenförmig nach außen vorstehend ausgebildet sein kann, falls eine Vergrößerung des oberen Dachraumes 2 notwendig ist. Dementsprechend können für den Bausatz unterschiedliche solcher Montageklappen 8 mit oder ohne bzw. mit unterschiedlich großer Auswölbung nach außen, vorhanden sein.

Um eine EMV-Dichtigkeit des oberen Dachraumes 2 zu erzielen, muss umlaufend eine Abschirmung aus Abschirmblechen 26 vorhanden sein.

Wenn daher - wie beim Dach 17 der Fall, gegebenenfalls aber auch bei der Vorderwand 19 und/oder den Seitenwänden 18 - diese aus nicht EMV-dichtem Material bestehen, wird der obere Dachraum 2 zusätzlich auf den Innenseiten durch zusätzliche Abschirmbleche 26 verkleidet, beispielsweise das unterhalb des Daches 17 montierte Dachblech 21 oder die knapp innerhalb von Vorderwand 19a und Rückwand 19b montierten vertikalen Abschirmbleche 26. Diese metallenen Flächen werden untereinander EMV-dicht verbunden, insbesondere durch Verkleben der Fugen dazwischen mittels selbstklebender Metallfolie, insbesondere Aluminiumfolie.

Die nicht dargestellten elektrischen Komponenten 7, die im oberen Dachraum 2 untergebracht werden sollen, werden dann an Montageträgern 23 montiert, die vertikal stehend zwischen dem Zwischenboden 5 und dem Dach 17 montiert sind, dieses aber insbesondere nicht ganz erreichen sondern dazwischen mittels Abstandsklötzen 24 auf Abstand gehalten werden, um einen oberen Spalt 25 für eine Umluftzirkulation zu erhalten.

Im Zwischenboden 5 sind ferner ein oder mehrere Durchlässe 5a angeordnet, durch welche die nicht dargestellten Kabel 12 hindurch geführt werden sollen. Damit auch diese abgedichtet durch die Durchlässe 5a hindurch geführt werden, werden auf diese Durchlässe 5a Durchlass-Blöcke 9 aufgesetzt und dicht verschraubt, die aus jeweils zwei gegeneinander gerichteten Hälften 9a,b bestehen, die an der gegeneinander gewandten Berührungskante halbkreisförmige Aussparungen in unterschiedlichen Größen aufweisen entsprechend der Durchmesser der dort danach hindurch zu führenden Kabel 12.

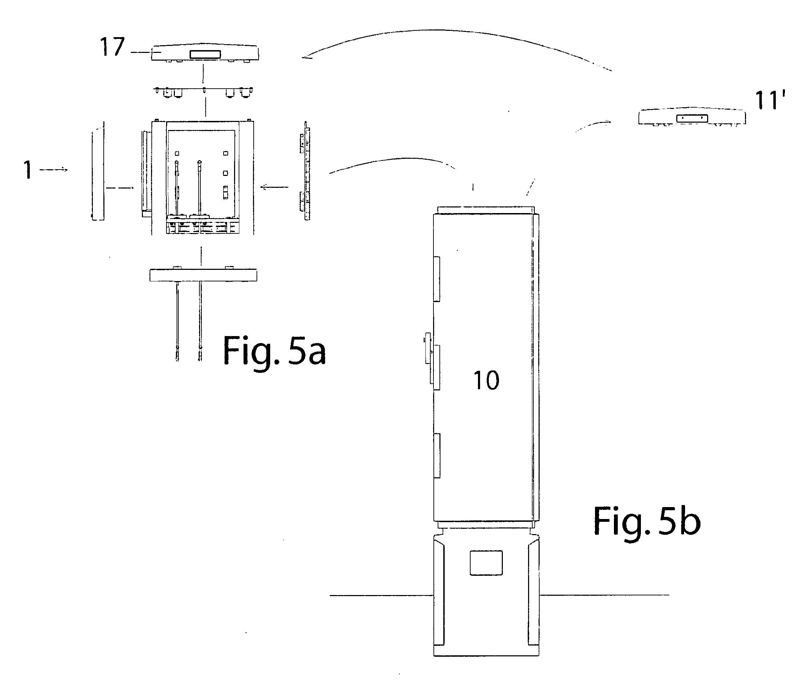

Mittels eines derartigen Dachaufsatzes 1 bzw. aus einem Bausatz hergestellten, z. B. unterschiedlich hohen Dachaufsätzen lassen sich vorhandene Kabelverteilerschränke 10 wie folgt durch zusätzlichen Bauraum nach oben erweitern, wie anhand der Figuren 5 dargestellt:

Die Figur 5a zeigt den Zusammenbau des Dachaufsatzes 1 soweit als möglich, im Idealfall die komplette Vormontage einschließlich der darin aufgenommenen elektrischen Komponenten 7 und deren Verbindung mit den Kabeln 12, Abdichten der durch die Kabeldurchlässe 4 laufenden Kabel 12 und auch - sofern nicht das alte Dach 11' verwendet wird - mit montiertem neuem Dach 7 auf dem Dachaufsatz 1 und im EMV-dichten Abdichten des oberen Dachraumes 2 von innen her.

Figur 5b zeigt dann den eigentlichen Umbauvorgang, indem das alte Dach 11' vom alten Gehäuse 11 abgenommen und auf das dann nach oben offene alte Gehäuse 13 - unter Umständen ohne das dessen Technik abgeschaltet werden muss - der komplett vormontierte neue Dachaufsatz 1 aufgesetzt und das von dort herabhängende Kabel oder die Kabel 12 anschließend durch die offene Tür 11" des alten Gehäuses 11 im alten Bauraum angeschlossen wird.

Lediglich für dieses Anschließen ist unter Umständen ein kurzfristiges Abschalten der Technik im Schrank 10 notwendig.

Falls das alte Dach 11' als Dach für den neuen Dachaufsatz 1 verwendet werden soll, kann dieses erst nach dem Aufsetzen des Dachaufsatzes 1 auf dem alten Gehäuse 11 montiert werden.
Der Hauptnachteil der Verwendung des alten Daches 11' besteht jedoch darin, dass dann aus Zugänglichkeitsgründen erst danach, also vor Ort und bei montiertem Dachaufsatz 1, Arbeiten wie EMV-dichtes Abdichten des oberen Dachraumes 2 und dortige Montage der aktiven Komponenten 7 durchgeführt werden kann, weshalb in den meisten Fällen auf das Wiederverwenden des alten Daches 11' verzichtet wird, um den Umbau zu beschleunigen.

### BEZUGSZEICHENLISTE

- 1: Dachaufsatz
- 2: oberer Dachraum
- 3: unterer Dachraum
- 4: Kabeldurchlass
- 5: Zwischenboden
- 5a: Durchlass
- 6: Kieme
- 7: aktive Komponente
- 8: Montageklappe
- 9: Durchlass-Block
- 9a b: Hälften
- 10: Kabelverteilerschrank
- 11: Gehäuse
- 11': altes Dach
- 11": Tür
- 12: Kabel
- 13: alter Bauraum
- 14: Aufsetz-Rahmen
- 15: Tragkonsole
- 16: Tragpfosten
- 17: Dach
- 18: Seitenwand
- 19a: Vorderwand
- 19b: Rückwand
- 19a': Frontrahmen
- 20: Nut
- 21: Dachblech
- 22a b: Kühlkörper
- 23: Montageträger
- 24: Abstandsklotz
- 25: Spalt
- 26: Abschirm-Blech

## Patentansprüche

1. Dachaufsatz mit
- einem dichten oberen Dachraum (2),
- einem darunter anschließenden, nach unten offenen, unteren Dachraum (3),
- einem die Dachräume (2, 3) trennenden Zwischenboden (5),
- abdichtbaren Kabeldurchlässen (4) vom unteren (3) zum oberen Dachraum (2) durch den Zwischenboden (5) hindurch, und
- Luftaustritts-Öffnungen vom unteren Dachraum (3) aus nach außen bei montiertem Dachaufsatz (1).

2. Dachaufsatz nach Anspruch 1,
**dadurch gekennzeichnet, dass**
der Dachaufsatz (1) außer dem Zwischenboden (5)
- einen unteren, horizontal umlaufenden, Aufsatzrahmen (14),
- ein Dach (17, 11'),
- dazwischen in den Ecken vertikal verlaufende Tragpfosten (16) sowie Wände (18,19) umfasst, und
- der Zwischenboden (5) in einer Höhenlage oberhalb des Aufsatzrahmens (14) angeordnet ist.

3. Bausatz zum Erstellen eines Dachaufsatzes (1) für Kabelverteilerschränke (10) gemäss Anspruch 1 mit
- wenigstens einem unteren, horizontal umlaufenden Aufsatzrahmen (14),
- wenigstens einem oberen Dach (17, 11'),
- unterschiedlich langen Tragpfosten (16) zum Anordnen zwischen dem Aufsatzrahmen (14) und dem Dach (17), unterschiedlichen Wänden (18, 19) zum Anordnen zwischen Dach (17), Aufsatzrahmen (14) und Tragpfosten (16), und
- wenigstens einem Zwischenboden (5) zur Anordnung parallel zwischen Aufsatzrahmen (14) und Dach (17).

4. Dachaufsatz bzw. Bausatz nach einem der vorhergehenden Patentansprüche,
**dadurch gekennzeichnet, dass**
- der Aufsatzrahmen (14), die Tragposten (16) und das Dach (17,11') aus Kunststoff, insbesondere als Spritzteile aus Polycarbonat, insbesondere geschäumten Polycarbonat, bestehen, und/oder insbesondere
- die Wände (18,19) aus Metallblechen, insbesondere Alublechen, bestehen und formschlüssig mit ihren Rändern in Nuten (20) des Daches (17,11'), der Tragpfosten (16) und des Aufsatzrahmens (14) aufgenommen sind, und/oder insbesondere
- das Dach (17,11') vom oberen Dachraum (2) aus an den Tragpfosten (16) verschraubt ist und der Aufsatzrahmen (14) vom Bauraum (13) des Schrankes (10) oder der Schrankenzwischenboden (5) vom oberen Dachraum (2) aus mit dem Schrank (10) verschraubbar ist.

5. Dachaufsatz bzw. Bausatz nach einem der vorhergehenden Patentansprüche,
**dadurch gekennzeichnet, dass**
- die Luftaustritts-Öffnungen als Kiemen (6) durch nach außen gedrückte Ausprägungen in den Metallblechen der Wände (18,19) ausgebildet sind, und/oder insbesondere
- der Zwischenboden (5) und/oder ein den oberen Dachraum (2) nach oben abschließendes, unter dem Dach (17,11') befestigtes Dachblech (21) aus Metall, insbesondere Alublech, besteht, und/oder insbesondere
- die aus Metall, insbesondere Alublech, gebildeten Umfangswände (18, 19, 21, 5) die den oberen Dachraum (2) bilden EMV-dicht miteinander verbunden sind, insbesondere durch Verkleben der Fugen dazwischen mittels selbstklebender Metallfolie.

6. Dachaufsatz bzw. Bausatz nach einem der vorhergehenden Patentansprüche,
**dadurch gekennzeichnet, dass**
- an der Rückwand (19b) innen und/oder außen rippenförmige Kühlkörper (22a, b) flächig anliegend, insbesondere unter Zwischenordnung einer Wärmeleitpaste, befestigt sind, und/oder insbesondere
- die Vorderwand (19a) aus einem umlaufenden Frontrahmen (19a') sowie einer die Frontöffnung verschließenden Montageklappe (8) besteht, und/oder insbesondere
- die Montageklappe (8) insbesondere wannenförmig nach außen gewölbt ist.

7. Dachaufsatz bzw. Bausatz nach einem der vorhergehenden Patentansprüche,
**dadurch gekennzeichnet, dass**
- der Aufsatzrahmen (14) nach innen ragende Tragkonsolen (15) zum Aufsetzen und Verschrauben des Zwischenbodens (5 sowie 15) zum Aufsetzen und Verschrauben auf dem Gehäuse (11) eines KVS aufweist, und/oder insbesondere
- der Zwischenboden (5) wenigstens einen Durchlass (5a) zum Hindurchführen von Kabeln (12) aufweist, und/oder insbesondere
- auf dem Durchlass (5a) in Hälften (9a, b) geteilte Durchlassblöcke (9) verschraubt sind, zischen denen die einzelnen Kabeldurchlässe (4) mit den passenden Durchmessern ausgebildet sind.

8. Dachaufsatz bzw. Bausatz nach einem der vorhergehenden Patentansprüche,
**dadurch gekennzeichnet, dass**
- zwischen Zwischenboden (5) und Dachblech (21) bzw. Dach (17) vertikal verlaufend wenigstens zwei Montageträger (23) verschraubt sind zum Befestigen der im oberen Dachraum (2) unterzubringenden aktiven Komponenten (7) , und/oder insbesondere
- zwischen dem oberen Ende der Montageträger (23) und dem oberen Dachblech (21) Abstandsklötze (24), die insbesondere aus Kunststoff bestehen, angeordnet sind, so dass über den größten Bereich der horizontalen Erstreckung ein oberer Spalt (25) zwischen dem Montageträger (23) und dem oberen Dachblech (21) verbleibt.

9. Verfahren zum Erweitern eines Kabelverteilerschrankes (10), der ein Gehäuse (11) mit einem alten Dach (11') aufweist, durch einen Dachaufsatz (1), der einen Zwischenboden (5), in dem wenigstens ein Kabeldurchlass (4) gebildet ist, und einen oberen Dachraum (2) aufweist, mit den folgenden Schritten:
- Abnehmen des alten Daches (11'),
- Anschließen von Weiterleitungs-Kabeln an der Technik im Bauraum (13) des alten Schrankes (10) und Hindurchführen von Kabel (12) durch den wenigstens einen Kabeldurchlass (4) des Zwischenbodens (5) in den oberen Dachraum (2) eines Dachaufsatzes (1) gemäss Anspruch 1,
- Aufsetzen und Befestigen des Dachaufsatzes (1) auf dem alten Gehäuse (11),
- Montieren von aktiven Komponenten im oberen Dachraum (2) des Dachaufsatzes (1),
- Anschließen der durch den Zwischenboden (5) hoch geführten Kabel (12) an den aktiven Komponenten im oberen Dachraum (2),
- Abdichten des wenigstens einen Kabeldurchlasses (4) durch den Zwischenboden (5), und
- Schließen einer Montageklappe (8) des Dachaufsatzes (1).

10. Verfahren nach einem der vorhergehenden Verfahrensansprüche,
**dadurch gekennzeichnet, dass**
- das alte Dach (11') auf dem neuen Dachaufsatz (1) aufgesetzt wird, und/oder insbesondere
- das neue Dach (17) auf den Dachaufsatz (1) aufgesetzt wird.

11. Verfahren nach einem der vorhergehenden Verfahrensansprüche,
**dadurch gekennzeichnet, dass**
das Montieren der aktiven Komponenten (7) im oberen Dachraum (2) sowie das Hindurchführen und Abdichten der Kabel (12) durch den Zwischenboden (5) und gegebenenfalls auch das Aufsetzen des neuen Daches (17) vor dem Aufsetzen des Dachaufsatzes (1) auf dem alten Gehäuse (11) erfolgt, und insbesondere der Dachaufsatz (1) einschließlich der darin aufgenommenen Komponenten (7) fertig vormontiert und verkabelt wird vor dem Aufsetzen auf das alte Gehäuse (11).

## Claims

1. A roof extension comprising:
- a tight upper roof cavity (2);
- a lower roof cavity (3) which adjoins thereunder and is open in downward direction;
- an intermediary floor (5) separating the roof cavities (2, 3);
- sealable cable pass-through openings (4) leading from the lower roof cavity (3) through the intermediary floor (5) to the upper roof cavity (2); and
- air exhaust openings from the lower roof cavity (3) towards an outside when the roof extension (1) is mounted.

2. The roof extension according to claim 1, wherein the roof extension (1) includes the following in addition to the intermediary floor (5):
- a lower horizontally circumferential attachment frame (14);
- a roof (17, 11);
- support posts (16) extending there between in corners and walls (18, 19),
- wherein the intermediary floor is arranged at an elevation above the attachment frame (14).

3. A kit for producing a roof extension (1) for cable distribution closets (10) according to claim 1, comprising:
- at least one lower horizontally circumferential attachment frame (14);
- at least one upper roof (17, 11');
- support posts (16) with different lengths for arranging between the attachment frame (14) and the roof (17), different walls (18, 19) for arranging between roof (17), attachment frame (14) and support post (16); and
- at least one intermediary frame (5) for arranging in parallel between the attachment frame (14) and the roof (17).

4. The roof extension or kit according to one of the preceding patent claims,
- wherein the attachment frame (14), the support posts (16) and the roof (17, 11') are made from plastic material, in particular made as polycarbonate injection molded components, in particular foamed polycarbonate and/or in particular,
- wherein the walls (18, 19) are made from sheet metal, in particular aluminum sheet metal and are received in a form locking manner with their edges in grooves (20) of the roof (17, 11') of the support posts (16) and the placement frame (14) and/or in particular
- wherein the roof (17, 11') is bolted from the upper roof cavity (2) to the support posts (16) and the attachment frame (14) can be bolted from the inner cavity (13) of the closet (10) or the intermediary closet floor (5) from the upper roof cavity (2) with the closet (10).

5. The roof extension or kit according to one of the preceding claims,
- wherein the air exhaust openings are configured as gills (6) through outward pressed embossings in the sheet metal plates of the walls (18, 19) and/or in particular,
- wherein the intermediary floor (5) and/or a roof plate (21) is made from metal, in particular aluminum sheet metal, wherein the roof plate closes the upper roof cavity (2) in upward direction and is attached below the roof (17, 11'), and/or in particular,
- wherein the metal, in particular aluminum sheet metal, circumferential walls (18, 19, 21, 5) which form the upper roof cavity (2) are connected with one another EMP tight, in particular through gluing the intermediary seams through self-adhesive metal foil.

6. The roof extension or kit according to one of the preceding patent claims,
- wherein rib shaped cooling elements (22a, b) are attached at the rear wall (19b) on the inside and/or outside with a flat contact, in particular with a heat conductive paste arranged there between and/or in particular
- wherein the front wall (19a) includes a circumferential front frame (19a') and a mounting flap (a) closing the front opening, and/or in particular
- wherein the mounting flap (8) is in particular cambered outward in a tub-shape.

7. The roof insert or kit according to one of the preceding patent claims,
- wherein the attachment frame (14) includes inward protruding support consoles (15) for attaching and bolting the intermediary floor (5 and 15) for attachment and bolting to the housing (1) of a KVS, and/or in particular
- wherein the intermediary floor (5) includes at least one pass-through opening (5a) for passing cables (12) through, and/or in particular
- wherein pass-through blocks (9) that are divided into halves (9a, b) are bolted onto the pass-through opening (5a), wherein particular cable pass-through openings (4) with appropriate diameters are configured between the pass-through blocks (9).

8. The roof extension or kit according to one of the preceding patent claims,
- wherein at least two mounting beams (23) that vertically extend between the intermediary floor (5) and the roof plate (21) or roof (17) are bolted down for attaching the active component (7) to be housed in the upper roof cavity (2), and/or in particular
- wherein spacer blocks (24) are arranged between the upper end of the assembly carriers (23) and the upper roof plate (21), wherein the spacer blocks are made in particular from plastic material so that an upper gap (25) remains between the assembly carrier (23) and the upper roof plate (21) over a major portion of the horizontal extension.

9. A method for extending a cable junction box (10), comprising a housing (11) with an old roof (11') through a roof extension (1) which includes an intermediary floor (5) in which at least one cable pass-through opening (4) is formed and which includes an upper roof cavity (2) with the following steps:
- removing the old roof (11');
- connecting forwarding cables to the components in the cavity (13) of the old junction box (10) by running a cable (12) through the at least one cable junction box (4) of the intermediary floor (5) into the upper roof cavity (2) of a roof extension (1) according to claim (1);
- applying and attaching the roof extension (1) on the old housing (11);
- mounting active components in the upper roof cavity (2) of the roof extension (1);
- connecting the cables (12) run up through the intermediary floor (5) with the active components in the upper roof cavity (2);
- sealing the at least one cable pass-through (4) through the intermediary floor (5); and
- closing an assembly flap (8) of the roof extension (1).

10. The method according to one of the preceding method claims,
- wherein the old roof (11') is applied to the new roof extension (1) and/or in particular
- wherein the new roof (17) is applied to the roof extension (1).

11. The method according to one of the preceding method claims,
- wherein mounting the active components (7) in the upper roof cavity (2) and passing and sealing the cables (12) through the intermediary floor (5) and optionally also applying the new roof (17) is performed before applying the roof extension (1) on the old housing (11) and in particular
- wherein the roof extension (1) including the components (7) received therein is completely assembled and wired before being placed onto the old housing (11).

## Revendications

1. Extension de toit, comprenant
- un coffre de toit supérieur étanche (2), et en-dessous de ce dernier
- un coffre de toit inférieur (3) ouvert vers le bas,
- un fond intermédiaire (5) séparant les coffres de toit (2,3),
- des passages de câble étanches (4) s'étendant du coffre de toit inférieur (3) vers le coffre de toit supérieur (2) en traversant le fond intermédiaire (5), et
des ouvertures d'évacuation d'air depuis le coffre de toit inférieur (3) vers l'extérieur avec l'extension de toit montée (1).

2. Extension de toit selon la revendication 1, **caractérisée en ce que** l'extension de toit (1) comprend outre le fond intermédiaire (5)
- un cadre d'extension (14) inférieur, horizontal sur toute la périphérie,
- un toit (17, 11')
- des montants supports (16) intercalés verticalement dans les angles ainsi que des parois (18, 19),
- le fond intermédiaire (5) est disposé dans une position en hauteur au-dessus du cadre d'extension (14).

3. Kit pour la mise en place d'une extension de toit(1) pour des armoires de distribution de câble (10) selon la revendication 1, comprenant
- au moins un cadre d'extension inférieur, horizontal (14)
- au moins un toit (17, 11'),
- des montants supports (16) de longueur différente pour la disposition entre le cadre d'extension (14) et le toit (17), des parois différentes (18, 19) pour la disposition entre le toit (17), le cadre d'extension (14) et les montants supports (16), et
- au moins un fond intercalé (5) pour la disposition parallèle entre le cadre d'extension (14) et le toit (17).

4. Extension respectivement kit de toit selon l'une des revendications précédentes, **caractérisé en ce que**
- le cadre d'extension (14), les montants supports (16) et le toit (17,11') se composent en tant que pièces moulées par injection, en particulier en polycarbonate alvéolaire, et/ou en particulier
- les parois (18, 19) se composent de tôles métalliques, en particulier de tôles en aluminium et sont logées par adhérence des forme par leurs bords dans des rainures (20) du toit (17, 11') des montants supports (16) et du cadre d'extension (14), et/ou en particulier
- le toit (17, 11') est vissé depuis le coffre de toit supérieur (2) sur les montants supports (16) et le cadre d'extension (14) depuis l'espace de montage (13) de l'armoire (10) ou le fond intermédiaire (5) peut être vissé depuis le coffre de toit supérieur (2) à l'armoire (10).

5. Extension respectivement kit de toit selon l'une des revendications précédentes, **caractérisé en ce que**
- les ouvertures d'évacuation d'air sont réalisées comme des encoches (6) par des empreintes pressées vers l'extérieur dans les tôles métalliques des parois (18, 19), et/ou en particulier
- le fond intermédiaire (5) et/ou une tôle métallique (21) fixés sous le toit (17, 11') fermant le coffre de toit supérieur (2) vers le haut se composent de métal, en particulier de tôles d'aluminium,
- les parois périphériques (18, 19, 21, 5) fabriquées en métal en particulier de tôles d'aluminium, qui forment le coffre de toit supérieur (2), sont reliées entre elles de manière étanche CEM, en particulier par collage des joints entre eux au moyen d'une feuille métallique autocollante.

6. Extension respectivement kit de toit selon l'une des revendications précédentes, **caractérisé en ce que**
- sur la paroi arrière (19b) à l'intérieur et/ou à l'extérieur, sont fixés des corps de refroidissement en forme de nervure (22a, b) s'appliquant sur la surface, en particulier en intercalant une pâte thermique, et/ou en particulier
- la paroi avant (19a) se compose d'un cadre frontal circulaire (19a') ainsi que d'une trappe de montage (8) fermant l'ouverture frontale, et/ou en particulier
- la trappe de montage (8) est bombée vers l'extérieur en particulier en forme de cuvette.

7. Extension respectivement kit de toit selon l'une des revendications précédentes, **caractérisé en ce que**
- le cadre d'extension (14) présente des consoles de support (15) faisant saillie vers l'intérieur pour la pose et le vissage du fond intermédiaire (5 resp. 15) et la pose et le vissage sur le coffret (11) d'une armoire de distribution de câbles, et/ou en particulier
- le fond intermédiaire (5) présente au moins un passage (5a) pour le guidage de câbles (12) et/ou
- sur le passage (5a), des blocs de passage (9) divisées en deux moitiés (9a, b) sont vissés entre lesquels sont réalisés les différents passages de câble (4) avec les diamètres adaptés.

8. Extension respectivement kit de toit selon l'une des revendications précédentes, **caractérisé en ce que**
- entre le fond intermédiaire (5) et la tôle de toit (21) respectivement le toit (17), au moins deux supports de montage verticaux (23) sont vissés pour la fixation des composants actifs (7) à loger dans le coffre de toit supérieur (2), et/ou en particulier
- entre l'extrémité supérieure des supports de montage (23) et la tôle de toit supérieure (21), il est disposé des blocs d'écartement (24) composés en particulier de matière plastique de sorte qu'il reste au-dessus de la plus grande zone de l'extension horizontale une fente supérieure (25) entre le support de montage (23) et la tôle supérieure de toit (21).

9. Procédé pour l'extension d'une armoire de distribution de câble (10) qui présente un coffret (11) avec un ancien toit (11'), par une extension de toit (1) qui présente un fond intermédiaire (5) dans lequel au moins un passage de câble (4) est formé et un coffre de toit supérieur (2), comprenant les étapes suivantes :
- retrait de l'ancien toit (11'),
- raccordement de câbles de transmission à la technique dans l'espace de montage (13) de l'ancienne armoire (10) et tirage de câbles (12) par au moins un passage de câble (4) du fond intermédiaire (5) dans le coffre de toit supérieur (2) d'une extension de toit (1) selon la revendication 1,
- pose et fixation de l'extension de toit (1) sur l'ancien coffret (11),
- montage de composants actifs dans le coffre de toit supérieur (2) de l'extension de toit (1),
- raccordement des câbles (12) guidés en hauteur à travers le fond intermédiaire (5) aux composants actifs dans le coffre de toit supérieur (2),
- étanchéification d'au moins un passage de câbles (4) par le fond intermédiaire (5) et
- fermeture d'une trappe de montage (8) de l'extension de toit (1).

10. Procédé selon l'une des revendications précédentes, **caractérisé en ce que**
- l'ancien toit (11) est placé sur la nouvelle extension de toit (1), et/ou en particulier
- le nouveau toit (17) est placé sur l'extension de toit (1).

11. Procédé selon l'une des revendications précédentes, **caractérisé en ce que** le montage des composants actifs (7) s'effectue dans le coffre de toit supérieur (2) ainsi que le guidage et l'étanchéité des câbles (12) à travers le fond intermédiaire (5) et éventuellement également le placement du nouveau toit (17) avant le placement de l'extension de toit (1) sur l'ancien coffret (11) et en particulier l'extension de toit (1) est prête à monter y compris les composants (7) logés à l'intérieur et est câblée avant le placement sur l'ancien coffret (11).
